Europäisches Patentamt

European Patent Office

Office européen des brevets

(11) Veröffentlichungsnummer: **0 192 807 B1**

# EUROPÄISCHE PATENTSCHRIFT

(45) Veröffentlichungstag der Patentschrift: **19.02.92**

(21) Anmeldenummer: **85106875.9**

(22) Anmeldetag: **04.06.85**

(51) Int. Cl.⁵: **C10L 5/04**, C01B 31/08, C04B 35/52, //C21B5/00, C21C7/00,C22B5/10

(54) Verfahren zur Herstellung reaktiver, kohlenstoffreicher Presslinge.

(30) Priorität: **23.02.85 DE 3506439**

(43) Veröffentlichungstag der Anmeldung:
**03.09.86 Patentblatt 86/36**

(45) Bekanntmachung des Hinweises auf die Patenterteilung:
**19.02.92 Patentblatt 92/08**

(84) Benannte Vertragsstaaten:
**BE DE GB IT NL**

(56) Entgegenhaltungen:
**EP-A- 0 138 100**    **CH-A- 248 423**
**DE-A- 2 755 562**    **DE-B- 1 017 592**
**DE-B- 1 289 857**    **DE-C- 885 391**
**DE-C- 900 208**    **DE-C- 3 100 727**

(73) Patentinhaber: **C. Deilmann AG**
**Deilmannstrasse 1**
**W-4444 Bad Bentheim(DE)**

(72) Erfinder: **Grumpelt, Heinrich, Dr. Ing.,**
**Dipl.-Berging.**
**Am Berghang 77**
**W-4444 Bad Bentheim(DE)**
Erfinder: **Jaroch, Johannes, Dipl.-Ing.**
**Brennereistrasse 21**
**W-4444 Bad Bentheim(DE)**

(74) Vertreter: **Hoffmeister, Helmut, Dr. Dipl.-Phys.**
**Patentanwalt Goldstrasse 36**
**W-4400 Münster(DE)**

**Beschreibung**

Die Erfindung betrifft ein Verfahren zur Herstellung reaktiver, kohlenstoffreicher Preßlinge für den Einsatz als Reaktionspartner in der Chemie oder Metallurgie, gemäß dem Oberbegriff des Anspruches 1.

Unter "kohlenstoffreichen Produkten" (erster Anteil) werden niederflüchtige Steinkohlen, nämlich Magerkohlen oder anthrazitische Kohlen, verstanden. Ihr Gehalt an flüchtigen Bestandteilen, beträgt, bezogen auf die wasser- und aschefreie Substanz (waf), weniger als 12 Gew.-%, während der Kohlenstoffgehalt über 90 Gew.-% (waf) liegt (vgl. DIN 23 003). Geeignet sind aber auch hochinkohlte Rückstandsprodukte einer unter Luftabschluß durchgeführten trockenen Destillation von Steinkohlen und Mineralölrückständen, bei der sich Kokse bzw. Petrolkokse, ergeben. Weiterhin sind Graphit oder Graphitabfälle, beispielsweise Elektroden-Graphitabfälle, verwendbar.

Unter "reaktiven, kohlenstoffreichen Preßlingen" sollen Preßlinge aus Stoffen verstanden werden, die Aufkohlungsreagentien, als Reduktionskohlenstoffe in der Elektrometallurgie und dergleichen verwendet werden können, wie dies im folgenden beschrieben wird.

Unter "hochreaktiven Produkten", die durch Verkohlung... "gewonnen wurden" (zweiter Anteil), werden insbesondere Torfkokse aus $C_{fix}$-reichen, aschearmen Schwarztorfen verstanden, die durch bekannte Verkokungstechniken gewonnen wurden (vgl. u.a. "Ullmanns Enzyklopädie der Technischen Chemie" Stichwort Torf, sowie Sonderdruck aus der Werkzeitschrift "Under Betrieb" 3/76 und 4/76 der Firma C. Deilmann AG, Bad Bentheim; Titel "Der Rohstoff Torf und seien zeitgemäße Verwendung als hochwertiger, aschearmer Industriekohlenstoff Torfkoks", Verfasser Dr. H. Grumpelt). Die Torfverkokung ist wie jedes Verkokungsverfahren ein trockener Destillations- und Pyrolysevorgang, der bei hohen Temperaturen bis zu 950° C unter Luftabschluß zur thermischen Aufspaltung der Kohlenwasserstoffe im Torf in den verbleibenden, hochangereicherten Kohlenstoff und die flüchtigen Bestandteile führt.

Im Verlaufe eines solchen Verkokungsprozesses wird aus $C_{fix}$-reichem Schwarztorf loser oder kompaktierter Beschaffenheit ein hochwertiges Kohlenstoffkonzentrat mit einem Brennwert von über 7500 kcal/kg mit einem niedrigen Gehalt an flüchtigen Bestandteilen und Asche erzeugt. Dabei sind Temperaturen bis zu 850° C erforderlich, um je nach Verfahren in 30 Minuten bis zu 20 Stunden den Kohlenstoffgehalt des Einsatzmaterials auf über 90 Gew.-% (waf) im Torfkoks anzureichern.

Torfkoks besteht als Leichtkoks sehr poröser und reaktiver Beschaffenheit aus Kohlenstoff einer amorphen Abart des Graphites. Die chemischen und physikalischen Eigenschaften von Torfkoksen deutscher Herkunft schwanken im allgemeinen nur in sehr engen Grenzen. Sie zeichnen sich neben den vorerwähnten Eigenschaften auch noch durch besonders niedrige Schwefel- und Phosphorgehalte aus. Deshalb lassen sich durch die Verwendung von Torfkoksen die Eigenschaften der eher reaktionsträgen Produkte, wie der Anthrazite, gemäß der eingangs genannten Aufgabenstellung in überraschender Weise verbessern und neue Kohlenstoffprodukte mit genau einstellbaren Eigenschaften für die Industrie herstellen.

Neben Torfkoks, Braun- und Lignitkoksen sind auch verkohlte organische Massen, z. B. Holzkohle oder andere reaktive Kohlenstoffe verwendbar. Diese können beispielsweise verkohlte Nußschalen, verkohltes, ausgelaugtes Zuckerrohr (Bagasse) und Ligninkokse sein. Allen diesen Produkten ist u.a. ein sehr lockeres, porenreiches Kohlenstoff-Gerüst mit hoher spezifischer Oberfläche neben großer Reaktivität gemeinsam.

Im allgemeinen können Torfkoks, Holzkohle oder andere reaktive Produkte, je nach Vorhandensein une gewünschten Eigenschaften, getrennt oder in einer beliebigen Mischung miteinander zusammen in die Ausgangsmasse zur Herstellung reaktiver, kohlenstoffreicher Preßlinge oder Körper eingebracht werden.

Als erste Bindemittel, die bei höheren Temperaturen sich zu verflüchtigen beginnen, werden vorzugsweise Bitumina oder Steinkohlenteerpeche verwendet. Diese können sowohl rein als auch in Mischung untereinander verwendet werden. Unter "Bitumina" werden die in DIN 52 128/29 und 55 946 definierten Bitumina, d. g. klebende, zähe, hochmolekulare, kolloidale Kohlenwasserstoffe verstanden, die als natürliche und künstliche Abdunstungsrest von Erdölen entstehen. Sie werden beispielsweise von der Deutsehen Shell AG, Hamburg, als "Normenbitume" vertrieben. Unter Steinkohlenteerpech werden die Rückstände der Steinkohlendestillation verstanden. Steinkohlenteerpeche werden beispielsweise von der "Verkaufsgesellsehaft für Teererzeugnisse mbH, Essen" unter der Bezeichnung "Teere" vertrieben.

Bekannt ist aus der CH-A-248 423 ein Verfahren zur Herstellung von Brennstoff-Preßkörpern. Für die Herstellung der Preßkörper werden Kohlensorten, wie Steinkohle, Koks, Holzkohle, verkohlter Torf oder andere brennbare Stoffe zerkleinert und gemischt. Zu der Mischung kommt außerdem trockenes Zellstofflaugenpulver hinzu. Als weiterer Bindestoff kann der Mischung noch Teer hinzugefügt werden. Die Ausgangsstoffe können auch teilweise feucht sein, z. B. in Form von Naßtorf. Das genannte Zellstofflaugenpulver dient weniger als Bindemittel, denn als Wasseraufsaugemittel. Die Qualität des Endproduktes läßt dieses nur als Brennstoff für den Hausbrand erscheinen.

Es ist weiterhin bekannt, daß verkokte, niedrig inkohlte fossile Massen wie Torfkoks, Braun- und Lignitkokse sowie verkohlte organische Massen, wie Holzkohle und Ligninkohle und deren Gemische, sehr große aktive Oberflächen aufweisen, a priori als hochwertige reaktive Kohlenstoffe darstellen und dementsprechend seit Jahrzehnten besonders vielfältige Verwendung als Reduktions- und Aufkohlungsmaterial, Filtermaterial, sowie weiterveredelt als Aktivkohlen gefunden haben. Naturgemäß weisen sie jedoch infolge ihrer großen Oberfläche und niedrigen Schüttgewichte eine geringe Abriebfestigkeit auf, was ihre Anwendnungsbereiche einschränkt.

Demgegenüber weisen kohlenstoffreiche anthrazitische Kohlen eine große Härte auf, sind jedoch ungemein reaktionsträge, wodurch wiederum ihr Einsatzbereich eingeschränkt wird.

Über den bereits zitierten Stand der Technik hinaus wurde bereits vorgeschlagen (deutsche Patentanmeldung P 33 35 484.7), bei einem Verfahren zur Herstellung reaktiver, kohlenstoffreicher Massen oder Körper, bei dem eine Ausgangsmasse, die zu einem Anteil von 50 - 90 Gew.-% aus anthrazitischer Steinkohle und aus einem weiteren Anteil von 5 - 40 Gew.-% an verkohlten, organischen Massen, wie Holzkohle, verkohlten Biomassen, Torfkoks und deren Gemischen, besteht, mit einem Bindemittel in einen verfestigten Zustand zu versetzen, zu vermahlen, zu mischen und in einer dem Verwendungszweck angepaßten Form einem Garungsprozeß zum Zwecke gänzlicher oder teilweiser Austreibung der flüchtigen Bestandteile zu unterwerfen.

Die ältere, nicht vorveröffentlichte Erfindung löste bereits die Aufgabe, mit Hilfe der vorerwähnten, verkohlten reaktiven Massen, in erster Linie Torfkoks und niederflüchtige Steinkohlen, worunter in erster Linie Anthrazit verstanden wird, reaktive, kohlenstoffreiche Massen oder Körper zu schaffen, die in Bezug auf definierte Eigenschaften, z.B. Reaktivität, elektrische Leitfähigkeit, Schüttgewicht, Abriebfestigkeit, Adsorptionsfähigkeit, und im Hinblick auf ihren Einsatz in der Elektrometallurgie, Metallurgie, Eisenhüttenwesen und als Filtermedien bei der Aufbereitung von Trink- und Brauchwässern etc., genau einstellbar sind und deshalb besser sind als die Ausgangsstoffe.

Sie löste ferner die Aufgabe, einerseits die staubförmigen und kleinen Anteile, welche bei der Gewinnung von hochreaktiven Kohlenstoffen, insbesondere von Torfkoks, Braun- und Lignitkosten, sowie Holzkohle und anderen organischen Massen sowie andererseits den zunehmenden bei bergmännischer Gewinnung und Aufbereitung anthrazitischer Kohlen anfallenden Staub- und Feinstkornanteil nicht nur zu verwerten, sondern gleichzeitig in veredelte Produkte zu überführen, wobei als Endprodukt sich ein hochwertiger, vielseitig verwendbarer Industriekohlenstoff ergibt.

Nachteilig bei dem Verfahren gemäß älterem Recht ist jedoch, daß die gemischten Produkte sofort einem Verschwelungsprozeß zugeführt werden müssen, wenn stärker beanspruchbare, transportfähige und lagerungsfähige Produkte daraus hergestellt werden sollen. Die "grünen" Preßlinge besitzen nur einen relativ schlechten Zusammenhalt und haben keine hohe Abriebfestigkeit.

Gegenüber dem älteren Recht stellt sich daher die Aufgabe, daß aus den genannten Ausgangsstoffen bei Verarbeitung im Bereiche von Raumtemperaturen (18 - 25° C) "grüne Preßlinge" ohne ein sofortiges anschließendes Verschwelen oder Verkoken oder eine Hochtemperaturbehandlung (Calcinieren) mit hoher innerer Festigkeit hergestellt werden können, die eine Verwendung der erhaltenen Produkte für den Einsatz als Reaktionspartner in der Chemie oder Metallurgie erlaubt.

Diese Aufgabe wird bei einem Verfahren der eingangs genannten Art dadurch gelöst, daß dem Gemisch

a) ein zweites Bindemittel ebenfalls bei Raumtemperatur trocken beigemischt wird, wobei die flüchtigen Bestandteile des ersten Bindesmittels erst bei höheren Temperaturen austreibbar sind als diejenigen des zweiten Bindemittels, und wobei als zweites Bindemittel wasserlösliche, klebende hochmolekulare Polymere verwendet werden,

b) daß den Bestandteilen des Ausgangsgemisches nach Mischung und Vermahlung eine Flüssigkeit bei Raumtemperatur zugegeben wird, die das zweite Bindemittel zum Verkleben bringt,

c) daß anschließend das Gemisch homogenisiert und nach Abwarten einer Reaktions- und Ruhezeit zu grünen Preßlingen geformt wird.

Gemäß gewonnener Erfahrungen wird die Ausgangsmasse, bestehend aus erstem (kohlenstoffreiche Produkte) und zweitem Anteil (hochreaktive Produkte) sowie aus den Bindemitteln, zunächst als feinkörniges Gemenge mit einer Korngröße aller Komponenten von ≦ 2 mm trocken vermischt, gemeinsam nachvermahlen sowie bei niedrigen Temperaturen nach Zugabe der Flüssigkeit gemengt, geknetet und nach ausreichender Konditionierzeit in eine dem Verwendungszweck angepaßte Form gebracht. Dabei können an sich bekannte Kompaktierungs- und Brikettierverfahren mit den dazugehörigen, an sich bekannten Anlagen angewandt werden, wie sie beispielsweise in der Futtermittelindustrie, für das Brikettieren von Steinkohlen und von Rohbraunkohle und bei der Aktivkohlenherstellung bekannt sind.

In Anwendungsfällen gemäß Erfindung ergibt sich ein Kompaktierungsprodukt, beispielsweise kombiniert als Reduktionskohlenstoff und Energielieferant für bei auf hohen Temperaturniveau stattfindender metallurgischer Verfahren. Dabei können bereits die "grünen" Preßlinge in schonend getrockneter, unverschwelter Form eingesetzt werden. Normalerweise schließt sich allerdings jedoch an die Trocknung der Preßlinge deren thermische Behandlung (Verschwelen, Verkoken, Calcinieren) und Umformung in einen $C_{fix}$-reichen, aber an flüchtigen Bestandteilen armen Formkoks an.

Als zweite Bindemittel eignen sich allgemein klebende, organische, hochmolekulare Polymere, vorzugsweise aus Pflanzen gewonnene Polysaccharide, die mit Hilfe von Wasser oder wäßrigen Lösungen zum Kleben gebracht werden, wie z. B. Hydroxyäthylcellulose (HÄC), die einen wasserlöslichen Klebstoff darstellt. Unter den Polysacchariden eignen sich insbesondere an sich bekannte Stärken (Amyl) aus Kartoffeln, Mais oder dergleichen (vgl. Artikel "Stärke" in RÖMPP, Chemielexikon, 7. Auflage). Als weitere Polysaccharide eignen sich Dextrane mit einem Molekülgewicht von 4.000 bis 100.000 oder Hemicellulosen, die ebenfalls mit Hilfe von Wasser oder wäßrigen Lösungen zum Kleben gebracht werden.

Als zweites Bindemittel eignet sich aber auch beispielsweise Lignin, das ein Polymeres des zu den Aromaten gehörenden Coniferylalkohols ist und das bei Cellulosegewinnung oder bei der Holzverzuckerung zur Alkohol- und Furfurolherstellung anfällt. Lignin wird mit Wasser oder wäßrigen Lösungen, insbesondere basische Lösungen, zum Quellen und Verkleben gebracht. Ebenso eignet sich Ligninsulfit, das als Abfallprodukt bei der Cellulosegewinnung anfällt.

Gemeinsam ist den zweiten Bindemitteln, daß diese mit der geeigneten Flüssigkeit, vorzugsweise Wasser oder schwach alkalischen wäßrigen Lösungen, zusammengebracht werden und innerhalb einer Konditionierzeit von 1 - 120 Minuten zum Quellen und Verkleben gebracht werden. Dabei hängt die zugegebene Wassermenge von dem Vermahlungsgrad sowie von den natürlich gegebenen Eigenschaften der jeweilig eingesetzten Bindemittel ab. Es kann als bekannt vorausgesetzt werden, daß die Kaltbrikettierung und die Verwendung derartiger Bindemittel an sich bekannt ist und daher die Einstellung der vor dem Pressen erforderlichen Konsistenz Sache des Anwenders ist.

Weiterhin ist vorteilhaft, wenn die zum Quellen des zweiten Bindemittels verwendete Flüssigkeit durch schonendes Niedertemperatur-Trocknen bis auf einen Rest von weniger als 5 Gew.-% aus den Formlingen herausgetrocknet wird. Diese schonende Vortrocknung, die unter strikter Vermeidung von Verschwelungsprozessen durchgeführt werden sollte, verhindert, daß bei der nachfolgenden Erhitzung auf höhere Temperaturen es zu einem Reißen und Platzen der Formlinge kommt.

Die Verschwelungstemperatur der vorgenannten Polymere bzw. Polysaccharide und des Lignins bzw. Ligninsulfits liegt etwa bei 250 - 450° C.

Grundsätzlich werden neben den Bindemitteln sämtliche Feststoffanteile der Ausgangsmasse zunächst trocken vermischt und dabei im pulverisierten Zustand weiterverarbeitet, d.h. falls für die Granulierung erforderlich, nochmals gemeinsam nachvermahlen und nach Zugabe der Quellflüssigkeit bei niedrigen Temperaturen weiterverarbeitet. Sie werden gemischt, geknetet und ruhengelassen, sowie schließlich in eine kompaktierte, brikettierte oder dem Verwendungszweck anderweitig angepaßte Form gebracht und anschließend bei Temperaturen zwischen 50 bis 105° C schonen getrocknet.

Sofern keine Verwendung der Preßlinge im "grünen" Zustand vorgesehen ist, erfolgt in einem weiteren Verfahrensschritt ihre Verschwelung in inerter Atmosphäre zum Zwecke gänzlicher oder teilweiser Austreibung der flüchtigen Bestandteile, wobei die Einzelpartikel des dabei entstehenden Formkokses durch das aus den Bindemitteln entstehende Kohlenstoffgerüst zusammengebacken und -gehalten werden. Trotz dichter Packung erweist sich das Verschwelungsprodukt als sehr porenreich, ohne daß es zu einer unerwünschten Brüchigkeit bzw. verminderten Abriebfestigkeit der verkohlten organischen Massen kommt.

Die Verschwelung der gegebenenfalls vorgetrockneten Preßlinge erfolgt unter bei ca. 100° C beginnender und bis zur Verschwelungstemperatur des ersten Bindemittels mit einer für die Qualität des Entproduktes angepaßt geführten Temperatursteigerung zur Austreibung flüchtiger Bestandteile aus den Bindemitteln und Herstellung eines alle Bestandteile verbindenden Kohlenstoffgerüstes. Weiterhin ist wesentlich, daß durch entsprechende Temperatur- und Prozeßführung alle die die Qualität des Endproduktes mindernden Restbestandteile der Bindemittel und gegebenenfalls Rohstoffe ausgetrieben werden können. Die Temperaturbehandlung erfolgt demzufolge vorzugsweise bei Temperaturen zwischen 500 und 1350° C über eine Zeit von 20 Minuten bis 20 Stunden in einer inerten Atmosphäre, beispielsweise in einem direkt beheizten Drehrohrofen.

Vorteilhaft ist insbesondere, daß mit dem neuen Verfahren aus kohlenstoffreichen Massen verschiedenster Zusammensetzungen, auch wenn diese nur als Feinkorn mit einer kaum zu einer industriellen Verwendung geeigneten Größe vorliegen, Preßlinge, Formlinge oder Briketts hergestellt werden können die verschiedenen Verwendungszwekken zugeführt werden können und nicht mehr die rohstoffspezifischen Mängel aufweisen.

Weiterhin ist möglich, Granulate vorgegebener Körnungen aus den geschwelten oder "grünen" Preßlingen durch an sich bekannte Brech- und Klassierverfahren herzustellen.

Mit Vorteil können den Ausgangsstoffen als weitere Komponente pulverige oder ganulierte Zuschlagstoffe, insbesondere Oxyde, hinzugefügt werden, die gegenüber den Ausgangsstoffen und im Rahmen des Verschwelens, Verkokens oder Calcinierens inert sind. Hierzu eignen sich insbesondere Quarzsande bis zu einem Anteil von 60 Gew.-%, bezogen auf das Ausgangsgemisch.

Zur Erläuterung der erfindungsgemäßen Verfahrensschritte ist eine Zeichnung beigefügt, die in schematischer Übersicht ein Verfahrensdiagramm zeigt, das im Prinzip auf alle nachfolgend beschriebenen Beispiele anzuwenden ist. Alle im folgenden genannten Teile, Anteile und Prozente beziehen sich jeweils auf das Gewicht.

Beispiel 1

"Grüne" Preßlinge und deren Verschwelung

Die Komponenten werden in getrennten Behältern vorrätig gehalten. Es sind in Vorratsbehältern folgende Komponenten vorhanden:
Anthrazit im Behälter 2, Torfkoks in Behälter 6, Kartoffelstärke in Behälter 10 und Steinkohlenteerpech in Behälter 14.

Über dargestellte Zuleitungen 1, 5, 9 und 13 werden den Behältern 2, 6, 10 und 14 die entsprechenden Komponenten zugeführt. Die Zusammensetzung kann stark variieren. 40 - 99 Gew.-% Anthrazit des Ibbenbürener Feldes oder qualitativ gleichwertige Kohle ergeben mit 1 - 60 Gew.-% Torfkoks zunächst eine Grundmasse, von der 100 Teile gemischt werden mit 1 - 20 Teilen Steinkohlenteerpech und 0,5 - 10 Teilen Stärke oder anderen klebenden Polymeren, sowie 10 - 30 Teilen Wasser. Je nach Wasseraufnahmefähigkeit und Oberflächenbeschaffenheit werden diese Massen bis zu einer stangpreßfähigen Konsistenz gebracht.

Aus den Behältern 2, 6, 10 und 14 werden bei kontinuierlichem Produktionsbetrieb zunächst die Komponenten, sofern sie nicht einzeln oder gemeinsam in einer Mahlanlage 16 nachvermahlen und erst danach über Zwischenförderer 17 und einen Bunker 18 geführt werden müssen, anteilsgerecht über Dosierwaagen 4, 8, 12 und 20 sowie über einen Verteiler 21 zwei Mischern 22 und 22' trocken zugeführt und intensiv vermischt.

Nachdem die Komponenten innig und homogen miteinander vermischt vorliegen, wird eine geeignete Flüssigkeit, z. B. Wasser, feinperlig zugemischt und die so entstehende feuchte Masse solange weiter in den Mischern 22, 22' durchgemengt, bis sichergestellt ist, daß eine rezeptgerechte, homogene Konsistenz der Preßlingsmasse eingestellt worden ist. Anschließend wird das fertige Gemenge in den Abbindebunker 24 mit Hilfe eines Fördersystems 23 nach Ablauf einer Konditionierzeit von 1 - 120 Minuten über ein Fördersystem 25 zu Pressen 26 geführt und dort zu einzelnen Preßlingen, Formlingen oder Briketts vorgegebener Abmessungen verpreßt. Die Verpressung erfolgt nach an sich bekannten Techniken, wie sie z. B. bei der Brikettierung von Stein- und Holzkohlen oder bei der Herstellung von geformten Aktivkohlen bekannt sind.

Die aus den Pressen 26 zu einem Fördersystem 27 gelangenden Preßlinge werden als "grüne" Preßlinge bezeichnet und auf direktem Wege geeigneten Trocknungssystemen, bei denen es sich um Niedertemperaturtrockner 28 handelt, zugeführt, in denen sie zur Erhöhung ihrer Festigkeit auf eine Restfeuchtigkeit von weniger als 5 Gew.-% getrocknet werden.

Danach kommen die so nachbehandelten "grünen" Preßlinge direkt über das Fördersystem 29 zur Absiebung und Verladung 36.

Es ist aber auch möglich, die "grünen" Preßlinge, sofern aus ihnen Formkokse vorgegebener Eigenschaften erzeugt werden sollen, zunächst über ein Fördersystem 32 einem Verschwelungsofen 34 zuzuführen und dort unter inerter Atmosphäre zu verschwelen. Anschließend werden sie über das Fördersystem 35 der Absiebung und Verladung 36 mit integrierter Nachzerkleinerung zugeführt.

Die so behandelten Preßlinge können nach Absiebung und Verladung demnach wahlweise in "grüner" oder verkokter Beschaffenheit als Formkoks in jeder gewünschten Körnung dem industriellen Verbraucher zugeführt werden. Im ersten Falle erfahren allerdings die "grünen" Preßlinge, Formlinge oder Briketts die prinzipiell angestrebte bzw. anwendungstechnisch notwendige Verschwelung beim industriellen Verbraucher während ihres Einsatzes z. B. im elektrometallurgischen Reduktionsprozeß. Der Anwender nutzt dabei für seinen thermischen Prozeß in seinen Öfen die bei der Verschwelung zu reaktiven kohlenstoffreichen Formkoksen bewußt die aus dem erstem Bindemittel (Bitumen und/oder Steinkohlenteerpech) sowie aus den flüchtigen Bestandteilen der beigemengten anderen Komponenten freiwerdende Energie aus.

Im Normalfall erfolgt die Verschwelung beim Hersteller der "grünen" Preßlinge zu reaktiven, kohlenstoffreichen Massen oder Formkokskörper. Dazu werden die "grünen" Preßlinge nach schonender Trocknung in dem Verschwelungsreaktor 34 unter inerter, weitgehend sauerstofffreier Atmosphäre verkokt. Die Prozeßtemperatur liegt je nach angestrebter Formkoksqualität während des Verschwelungsvorganges zwischen 500 und 1350° C.

Dabei beträgt die Verweilzeit der Preßlinge im Verschwelungsreaktor im allgemeinen zwischen 2O Minuten und 20 Stunden. Diese Werte können jedoch produktspezifisch variiert werden.

In jedem Falle werden die Preßlinge, Formlinge oder Briketts schonend geschwelt und so in die gewinnbare Formkoksqualität überführt. Dazu können auch z. B. direkt oder indirekt beheizte Drehrohre eingesetzt werden. Für die direkte Beheizung ist lediglich im Anfahrbetrieb ein Gasbrenner erforderlich, der zum Anheizen des Systems, gegebenenfalls sowohl mit Schwelgas als auch mit Flüssiggas (z. B. Propan) betrieben werden kann. Im Dauerbetrieb wird dem Prozeß dann lediglich Luft zugeführt, wobei das beim Schwelvorgang im Drehrohr entstehende Schwelgas 30 - sofern es nicht zur Aufrechterhaltung der notwendigen Verschwelungstemperaturen im Drehrohr verbrannt wird - abgezogen und einem Schwelgasbrenner des Trockners 28 zugeführt wird. Bei diesem wird im allgemeinen für den Anfahrbetrieb ebenfalls der Einsatz von Flüssiggas vorgesehen.

Selbstverständlich muß dafür gesorgt werden, daß das Schwelgas stets vollständig abgebrannt wird, bevor es in die Atmosphäre als Rauchgas eintreten darf.

Die nach der Verschwelung den Verschwelungsofen 34 wiederum über eine gasdichte Schleuse verlassenden Preßlinge, Formlinge oder Briketts weisen als Verschwelungsprodukte eine sehr poröse, oberflächenreiche Struktur auf. Es handelt sich daher bei diesen Formkoksen um sehr reaktive kohlenstoffreiche Massen und Körper. Sie sind gegenüber den "grünen" Preßlingen etwas geschrumpft. Stückform und Größe sind auf den jeweiligen Anwendungszweck abgestimmt. Dabei haben die Preßlinge beispielsweise die Form von Kissen- oder Eierbriketts oder von zylindrischen Körpern, zum Teil mit den für die Anwendungen vorteilhaften Bruchkanten.

Die dem Verschwelungsofen entnommenen Verschwelungsprodukte werden in einem Nachkühler (nicht dargestellt), z. B. in einer Bandkühlstrecke, unter Ausnutzung der fühlbaren Wärme auf indirektem und/oder direktem Wege mit Wasser und Kühlluft auf Umgebungstemperatur abgekühlt. Die bei der Kühlung des beißen Gutes von der Luft aufgenommene Wärme kann als vorgewärmte Verbrennungsluft für den (Schwel-)Gasbrenner der Trockner 28 verwendet werden. Energieverluste des Gesamtsystemes können auf diese Weise äußerst gering gehalten werden.

Bei der Verschwelung der "grünen" Preßlinge, Formlinge oder Briketts können anstelle des vorerwähnten Drehrohrofens auch aufwendigere Systeme, z. B. Etagenöfen, Bandschweler oder Drehherde, eingesetzt werden. Auch ist es möglich, ausgekleidete Schachtöfen einzusetzen, wie diese bei der Erzeugung von Torfkoks aus Brenntorfsoden (s. Lit. GRUMPELT, a. a. O.), bekannt sind.

Erfindungsgemäß können je nach vorgesehenem Verwendungszweck Qualität, Zusammensetzung und Stückigkeit sowie besondere spezifische Eigenschaften von "grünen" Preßlingen und deren Verschwelungsprodukten auch durch Variation der Mischungsverhältnisse sowie bei der Wahl von Ausgangsstoffen, der Bindemittel und während der thermischen Umwandlung der "grünen" Preßlinge durch Einstellen der gewünschten Verschwelungsbedingungen beeinflußt werden.

Die Verschwelungsprodukte können u. a. in der Chemie (beispielsweise zur Herstellung von FeSi) oder in der Kommunalwirtschaft verwendet werden.

Im folgenden werden weitere Anwendungsbeispiele erläutert, die erfindungswesentliche Anwendungen der Produkte und Verfahrensschritte zu ihrer Herstellung zeigen.

Beispiel 2

Herstellung von Produkten für die elektrometallurgische Erzeugung von technisch reinem Silizium

Bei der Herstellung von kohlenstoffreichen reaktiven Reduktionsmaterialien für die Produktion von technisch reinem Silizium in Niederschachtöfen müssen die Formlinge sehr fest sein, damit diese während des Reduktionsvorganges im Ofen nicht zerfallen oder erweichen. Für die Herstellung solcher Preßlinge kommen daher in erster Linie hochwertige erste Bindemittel, nämlich Steinkohlenteerpech und Bitumen in Frage.

100 Teile der Ausgangsmasse sind zusammengesetzt wie folgt:
50 Teile Anthrazit aus Ibbenbüren, mit 91,5 Gew.-% (waf) $C_{fix}$ und 5 Gew.-% (waf) Flüchtigen Bestandteilen mit naturstoffgegebenen Schwankungen, 10 Teile Petrolkoks, 15 Teile Torfkoks, 5 Teile Tannen- und Kiefernholzkohle, alle Teile vorzerkleinert unter 2 mm trocken vorliegend. Es folgt ein trockenes Nachvermahlen und Mischen mit 10 Teilen Steinkohlenteerpech und 5 Teilen Bitumen, dem sich die Zugabe von 5 Teilen trockener, pulverisierter Pflanzenstärke (Mais- und/oder Kartoffelstärke) und eine nochmalige trockene intensive Vermischung anschließt, bevor die Mischung bei Zimmertemperatur mit Wasser oder alkalischen wäßrigen Lösungen (1 %ige Lösung der Base eines Alkali- oder Erdalkalimetalls oder von Ammoniakwasser) versetzt wird. Das Gemenge wird zum Quellen und Verkleben der Pflanzenstärke ca. 10 - 120 Minuten ruhen gelassen (Konditionierzeit) und hat dann eine preßfähige Beschaffenheit zur kalten Herstellung "grüner" Preßlinge. Anschließend werden die preßfähigen Massen in bekannten Pressen zu hühnereigroßen Preßlingen geformt.

Die so erzeugten Preßlinge werden anschließend einer Niedertemperaturtrocknung unterworfen, wobei der Wassergehalt auf 5 % herabgesetzt wird. Nach weiterer thermischer Behandlung in einem anschließenden Verschwelungsprozeß in inerter Atmosphäre, bei dem aus ihnen durch Austreibung der Flüchtigen Bestandteile aus den Bindemitteln und Herstellung eines alle Ausgangsbestandteile verbindenden Kohlenstoffgerüstes kohlenstoffreichere Formkokse erzeugt werden, können sie dem Endverbraucher zugeführt werden.

Die Preßlinge können weiterhin in "grüner" oder verkokter Form zur Herstellung von Granulaten vorgegebener Körnungen gebrochen und klassiert werden.

Beispiel 3

Herstellung von Produkten für die elektrometallurgische Erzeugung von Ferrosilizium-Produkten

Bei der Herstellung von kohlenstoffreichen reaktiven Reduktionsmaterialien für die Produktion von Ferrosilizium-Produkten in Niederschachtöfen sind hochfeste Formlinge erforderlich, damit diese während des Reduktionsvorganges im Niederschachtofen keine wesentliche Formänderung erfahren, nicht zerfallen und nicht erweichen.

Die Ausgangsmasse ist wie folgt zusammengesetzt:
60 Teile Anthrazit, z. B. aus Ibbenbüren, mit 91,5 Gew.-% (waf) $C_{fix}$ und 5 Gew.-% (waf) Flüchtigen Bestandteilen mit den naturstoffgebundenen Schwankungen, 15 Teile Torfkoks, 10 Teile Tannen- und Kiefernholzkohle, alle Teile vorzerkleinert und unter 2 mm trocken vorliegend. Es folgt ein trockenes Nachvermahlen und Mischen mit 10 Teilen Steinkohlenteerpech und 4,5 Teilen Bitumen. Anschließend werden diesem Gemisch 0,5 Teile Hydroxyäthylcellulose (HÄC), in Wasser gelöst im Verhältnis 1 Teil HÄC : 19 Teile Wasser, beigegeben und bei Normaltemperatur intensiv gemengt mit dem Ziel, das Gemisch durch Quellen der HÄC-Moleküle und Verkleben dieser mit den anderen Bestandteilen nach einer geeigneten Reaktions- und Ruhezeit (Konditionierzeit) in eine preßfähige Beschaffenheit zur kalten Herstellung "grüner" Preßlinge mit einer dem Anwendungszweck angepaßten Form und Stückgröße überführen zu können. Anschließend erfolgt das Pressen in einer Brikettierpresse zu kleinen Quadern (Briketts).

Die so erzeugten Preßlinge werden anschließend einer Niedertemperaturtrocknung unterworfen, bis der Feuchtigkeitsgehalt etwa 2 % beträgt. Danach können sie direkt dem Endverbraucher zugeführt werden. Die Preßlinge können außerdem zur Herstellung von Granulaten verschiedener Körnungen gebrochen und klassiert werden.

Beispiel 4

Herstellung von Produkten für die Erzeugung von Siliziumkarbid, Schwefelkohlenstoff oder Phosphor

Reaktives, kohlenstoffreiches Reduktionsmaterial für die Erzeugung von Siliziumkarbid und anderen Karbiden sowie Schwefelkohlenstoff und Phosphor kann grundsätzlich mit geringwertigeren zweiten Bindemitteln hergestellt werden, z. B. Sulfitablauge oder Lignin. Außerdem können preisgünstige Kohlenstoffe eingesetzt werden. Die dabei erzeugten Preßlinge können in der kaltbrikettierten Form weiterverwendet werden.

100 Teile der Ausgangsmasse sind wie folgt zusammengesetzt:
50 Teile Petrolkoks mit 93 Gew.-% (waf) $C_{fix}$ und 3 Gew.-% (waf) Flüchtigen Bestandteilen, 15 Teile Steinkohle (Magerkohle) mit 91 Gew.-% (waf) $C_{fix}$ und 12 Gew.-% (waf) Flüchtigen Bestandteilen, 5 Teile Torfkoks, 10 Teile verkohlte Holzabfälle (Sägemehl und Hobelspäne), 10 Teile Lignin und 10 Teile Sulfitablauge mit dem Hauptbestandteil Ligninsulfit, alle Teile vorzerkleinert unter 2 mm oder pulverisiert trocken vorliegend.

Es folgt das trockene Mischen und Mahlen bei Zimmertemperatur mit einem auf die für das Abbinden und Formen eingestellten Wassergehalt. Daran schließt sich das Verpressen der kalten Massen mit an sich bekannten Brikettieranlagen zu einer dem jeweiligen Anwendungszweck angepaßten Form und Stückgröße an.

Beispiel 5

Herstellung eines kohlenstoffreichen Aufkohlungsmaterials für Metallurgie

Für diesen Anwendungszweck wird je nach Aufkohlungsschritt bzw. Aufkohlungsverfahren ein reines, $C_{fix}$-reiches Kohlenstoffprodukt hohen Schüttgewichtes, gekennzeichnet vor allem durch niedrige Gehalte an $H_2$, $N_2$ und sonstigen Flüchtigen Bestandteilen sowie wenig Schwefel, Phosphor und Asche, also ein Formkoksprodukt hoher Qualität, benötigt.

100 Teile Ausgangsmasse sind wie folgt zusammengesetzt:
40 Teile Anthrazit, z. B. aus Ibbenbüren, mit 91 Gew.-% (waf) $C_{fix}$ und 5 Gew.-% (waf) Flüchtigen Bestandteilen, 30 Teilen mitteltemperatur-verkoktem Steinkohlenkoks mit 93 Gew.-% (waf) $C_{fix}$ und 3 Gew.-% (waf) Flüchtigen, 15 Teilen Braunkohlenkoks, 5 Teilen Steinkohlenteerpech, 5 Teilen Bitumen unter Zugabe von 2,5 Teilen trockener pulverisierter Pflanzenstärke und 2,5 Teilen Dextran mit einem Molekülgewicht zwischen 4000 und 100000.

Zur Herstellung des Aufkohlungsmaterials werden die Ausgangsmassen Anthrazit, Koks, Torfkoks, Steinkohlenteerpech und Bitumen gemeinsam auf unter 2 mm Stückelung trocken aufgemahlen und nachfolgend mit dem Bindemittelgemisch intensiv trocken vermischt. Anschließend wird für das Verkleben der Kaltmischung und deren Verpressen in an sich bekannten Brikettiersystemen Wasser in der dafür notwendigen Menge feinperlig zugegeben. Das ganze wird anschließend nochmals gemischt.

Anschließend folgen dann die für das Quellen der Stärke vorteilhafte Reaktions- und Ruhezeit (Konditionierzeit) sowie das kalte Pressen und die Niedertemperaturtrocknung der Preßlinge auf unter 5 Gew.-% Restwassergehalt. Anschließend werden die Preßlinge der Verkokung zugeführt, bei der durch gezielte Führung des Prozeßes der trockenen Destillation in inerter Atmosphäre bei Temperaturen bis 1350° C die Einstellung der für den hier vorliegenden Anwendungszweck zweckmäßigsten Formkokseigenschaften erfolgt. Die Körnung des Aufkohlungsgranulates kann sowohl beim Pressen als auch durch nachträgliche Zerkleinerung - wie in Beispiel 1 - dem jeweiligen Anwendungszweck angepaßt werden.

## Beispiel 6

Herstellung hochkohlenstoffreicher Aufkohlungsmaterialien für die Metallurgie

Während das Beispiel 4 die Herstellung von mehr für die sogenannte Voraufkohlung geeignete Aufkohlungsmaterialien beschreibt, dient Beispiel 6 mehr der Beschreibung der Herstellung von hochreinen Kohlenstoffen für die Feinaufkohlung.

100 Teile Ausgangsmasse setzen sich wie folgt zusammen:
85 Teile Elektrodengraphitbruch, gegebenenfalls gemischt mit Graphitgranulat und -staub, auf unter 2 mm vorzerkleinert, 5 Teile chemisch entaschter Torfkoks, 3,5 Teile Steinkohlenteerpech und 4 Teile Bitumen, wie im Beispiel 1, unter Zugabe von 2,5 Teilen pulverisierter Hemicellulose.

Zur Herstellung des Aufkohlungsmateriales werden die Ausgangsmassen Graphit, Torfkoks, Steinkohlenteerpech und Bitumen gemeinsam intensiv trocken vermischt, gegebenenfalls nachvermahlen und nachfolgend mit der Hemicellulose intensiv trocken vermischt, ehe die für das Verkleben der Kaltmischung und deren Verpressung in an sich bekannten Brikettiersystemen erforderkiche Flüssigkeit, z. B. alkalisiertes Wasser (pH 5,5), in der dafür notwendigen Menge feinperlig zugegeben wird.

Entsprechend Beispiel 1 folgen dann die für das Quellen der Hemicellulose unabdingbare Reaktions- und Ruhezeit (Konditionierzeit) von etwa 60 Minuten, sowie das kalte Pressen und die Niedertemperaturtrocknung der Preßlinge auf unter 5 Gew.-% Restwassergehalt, ehe die Preßlinge der Verkokung zugeführt werden. Durch gezielte Führung des Verkokungsprozesses und der damit verbundenen trockenen Destillation in inerter Atmosphäre bei Temperaturen bis 1350° C erfolgt die Einstellung der für den hier vorliegenden Anwendungszweck zweckmäßigsten Formkokseigenschaften.

Die Körnung des Aufkohlungsgranulates kann sowohl beim Pressen als auch durch nachträgliche Zerkleinerung dem jeweiligen Anwendungszweck angepaßt werden.

## Beispiel 7

Herstellung von kohlenstoffreichen Filtermaterialien für die Trink- und Abwasseraufbereitung

Bei der Herstellung von kohlenstoffreichen Filtermaterialien für die Reinigung von Trink- und Abwässern werden neben hohen Druck- und Abriebfestigkeiten vor allem auch gute Porosität, chemische Reinheit und gute Rückspülfähigkeit der Preßlinge verlangt.

Für die Herstellung solcher Preßlinge kommen daher nur hochwertige Kohlenstoffe und Bindemittel in Frage, die sich auch zur Herstellung von thermisch weiterveredelten Produkten aus solchen Formkoksen eignen.

100 Teile der Ausgangsmasse sind wie folgt zusammengesetzt:
40 Teile Anthrazit, z. B. aus Ibbenbüren, mit 91,5 Gew.-% (waf) $C_{fix}$ und 5 Gew.-% (waf) Flüchtigen Bestandteilen, 15 Teile Torfkoks, 10 Teile Buchenholzkohle, 15 Teile Braunkohlenkoks oder 15 Teile Lignitkoks. Alle Teile sind vorzerkleinert auf Korngröße unter 2 mm trocken. Es folgt ein trockenes Nachvermahlen und Mischen mit 15 Teilen ebenfalls auf unter 2 mm vorzerkleinertem Steinkohlenteerpech-Bitumen-Gemisch (1 : 1). Anschließend werden 5 - 10 Teile pulverisierte Maisstärke zugegeben und alle Komponenten nochmalig trocken intensiv vermischt, bevor die Mischung mit Wasser oder geeigneten Quell- und Lösungsmitteln versetzt wird, um das Gemenge durch das Quellen oder Verkleben der Pflanzenstärke nach einer geeigneten Reaktions- und Ruhezeit (Konditionierzeit) in eine preßfähige Beschaffenheit zur kalten Herstellung "grüner" Preßlinge mit einer jeweils dem Anwendungszweck angepaßten Form und Stückgröße überführen zu können.

Die so erzeugten Preßlinge werden zunächst einer schonenden Niedertemperaturtrocknung auf unter 5 Gew.-% Restfeuchtigkeit und anschließend einem Verschwelungsprozeß in inerter Atmosphäre bei Temperaturen zwischen 550° C und 950° C unterworfen, wobei eine Temperaturerhöhung von 20° C/min erfolgt und die Endtemperatur 30 Minuten lang gehalten wird.

Die vorgenannten Beispiele können durch Austauschen der Komponenten "mutatis mutandis" variiert werden, ohne daß der Schutzumfang der durch die Ansprüche definierten Erfindung verlassen wird.

Ein weiterer Vorteil ist, daß das Gefüge der Preßlinge es auch verträgt, wenn weitere Zuschlagsstoffe hinzugefügt werden, die gegenüber den Ausgangsstoffen im Rahmen des Pyrolyseverfahrens zunächst inert sind, die aber in einem nachfolgenden Einsatzgebiet der Preßlinge benötigt werden, z.B. pulverige oder granulierte Oxide verschiedener Zusammensetzung. Eine solche Beimischung sei anhand von Beispiel 8 erläutert.

Beispiel 8

Herstellung von Formlingen für die elektrometallurgische Erzeugung von Ferrosilizium-Produkten, Silizium-Carbid und Silizium-Metall.

Bei der Herstellung von Silizium werden Kohlenstoffe und Quarzsande im Ofen gemischt und das Silizium aus dem Quarz erschmolzen. Zur Verringerung der Ofengangzeiten zur Energieeinsparung und zur Erhöhung des Ausbringens an Fertigprodukten bei gleichzeitiger Verminderung von Rohstoffverlusten ($SiO_2$) werden Formlinge benötigt, in denen Kohlenstoffträger und Quarzsande innig miteinander vermischt und in eine leicht handhabbare Form mit hoher mechanischer Festigkeit gebracht werden.

100 Teile der Ausgangsmasse für solche Formlinge werden wie folgt zusammengesetzt:

30 Teile Anthrazit im Körnungsbereich 0,5 - 0,8 mm,

20 Teile Torfkoks im Körnungsbereich 0,5 - 0,8 mm,

7 Teile Steinkohlenteerpech im Körnungsbereich 0,3 - 0,8 mm,

3 Teile pulverisierte Weizenstärke und

40 Teile Quarzsand (Feinsand der Körnung 0,2 - 0,5 mm).

Diese Komponenten werden zunächst trocken gemischt. Dann erfolgt die für das Verkleben der Kaltmischung notwendige Wasserzugabe und nach einer genügenden Abbindezeit von ca. 45 min., die Verpressung der Mischung in bekannten Brikettiersystemen.

Anschließend werden die Formlinge in einer Niedertemperaturtrocknung auf einen Wassergehalt von unter 5 Gew.-% eingestellt.

Je nach Anforderung des Verbrauchers werde die getrockneten Formlinge dann versandt oder in einer Verkokungsanlage zur Reduktion des Gehaltes an flüchtigen Bestandteilen in inerter Atmosphäre bei Maximaltemperaturen bis 1200°C verkokt.

Die Körnung des Materials kann sowohl beim Pressen als auch bei einer nachträglichen Zerkleinerung desn Anforderungen des Verbrauchers angepaßt werden.

Wie die Erfahrung zeigt, können pulverige oder feingranulierte inerte Feststoffe bis zu 60 Gew.-%, bezogen auf die Gesamtheit der Ausgangsstoffe, analog zu Beispiel 8, beigemischt und verpreßt werden. Die Körnung sollte zwischen 0,1 und 0,8 mm liegen.

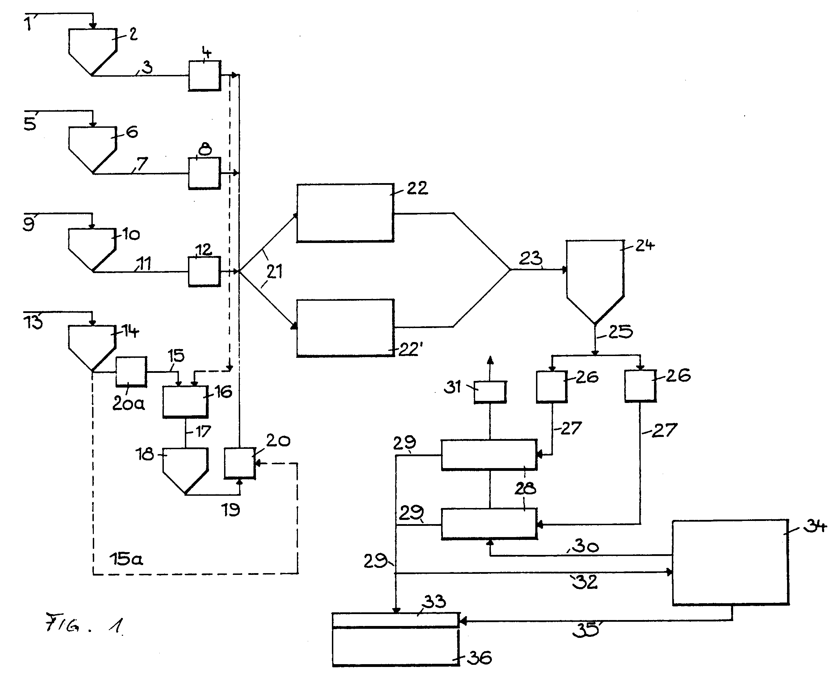

**Patentansprüche**

1. Verfahren zur Herstellung reaktiver, kohlenstoffreicher Preßlinge für den Einsatz als Reaktionspartner in der Chemie oder Metallurgie, bei dem

i) ein erster Anteil von kohlenstoffreichen, reaktionsträgen Produkten, ausgewählt aus der Gruppe Magerkohlen, Anthrazite, Metaanthrazite, Kokse, Petrolkokse und Graphit, mit einem Gehalt an flüchtigen Bestandteilen, bezogen auf die wasser- und aschefreie Substanz (waf), von weniger als 12 Gew.-% und ein zweiter Anteil an hochreaktiven Produkten, die durch Verkohlung von niedrig-inkohlten fossilen Rohstoffen oder organischen Massen gewonnen wurde, wie Torfkoks, Braun- und Lignitkokse, sowie verkohlte Biomassen (beispielsweise Holzkohlen und Ligninkokse) gemahlen, wobei die vorgenannten Anteile in einem Verhältnis on 40-99 Gew.-% zu 1-60 Gew.-% von erstem zu zweitem Anteil eingesetzt werden,

ii) anschließend mit Bitumina oder Steinkohlenteerpechen als erstem Bindemittel bei Raumtemperatur versetzt werden, welches die Eigenschaft hat, bei Erhitzung bis auf einen die Einsatzprodukte verbindenden Verkokungsrückstand sich zu verflüchtigen, und

iii) bei dem dann das Gemisch in eine stabile Form gepreßt wird, dadurch gekennzeichnet,

a) daß ein zweites Bindemittel ebenfalls bei Raumtemperatur trocken beigemischt wird, wobei die flüchtigen Bestandteile des ersten Bindemittels erst bei höheren Temperaturen austreibbar sind als diejenigen des zweiten Bindemittels, und wobei als zweites Bindemittel wasserlösliche, klebende hochmolekulare Polymere verwendet werden,

b) daß den Bestandteilen des Ausgangsgemisches nach Mischung und Vermahlung eine Flüssigkeit bei Raumtemperatur zugegeben wird, die das zweite Bindemittel zum Verkleben bringt,

c) daß anschließend das Gemisch homogenisiert und nach Abwarten einer Reaktions- und Ruhezeit zu grünen Preßlingen geformt wird.

2. Verfahren nach Anspruch 1, dadurch gekennzeichnet, daß als zweites Bindemittel Hydroxyäthylcellulose verwendet wird, das mit Hilfe von Wasser oder wäßrigen Lösungen, insbesondere basischen Lösungen, zum Quellen und Verkleben gebracht wird.

3. Verfahren nach Anspruch 1, dadurch gekennzeichnet, daß als zweites Bindemittel aus Pflanzen gewonnene Polysaccharide (Dextrane, Amyla) verwendet werden, deren Molekülgewicht zwischen 4000 und 100000 liegt und die mit Hilfe von Wasser oder wäßrigen Lösungen zum Kleben gebracht werden.

4. Verfahren nach Anspruch 1, dadurch gekennzeichnet, daß als zweites Bindemittel Lignin aus Hydrolyse- bzw. Alkohol- und Furfurolherstellungsverfahren verwendet wird, das mit Hilfe von Wasser oder wäßrigen Lösungen, insbesondere basischen Lösungen, zum Quellen und Verkleben gebracht wird.

5. Verfahren nach Anspruch 1, dadurch gekennzeichnet, daß als zweites Bindemittel Ligninsulfit verwendet wird, das mit Hilfe von Wasser oder wäßrigen Lösungen zum Quellen und Verkleben gebracht wird.

6. Verfahren nach Anspruch 1 bis 5, dadurch gekennzeichnet, daß das zweite Bindemittel mit der geeigneten Flüssigkeit innerhalb einer Konditionierzeit von 1 bis 120 Minuten zum Quellen und Verkleben gebracht wird.

7. Verfahren nach Anspruch 1 bis 6, dadurch gekennzeichnet, daß die Flüssigkeit, die das zweite Bindemittel klebefähig macht, durch schonendes Niedertemperatur-Trocknen bis auf einen Rest von weniger als 5 Gew.-% aus den Formlingen herausgetrocknet wird.

8. Verfahren nach Anspruch 1 und 7, dadurch gekennzeichnet, daß der zur Erzeugung von calcinierten Formlingen dienende Preßling unter einer bei ca. 100 °C beginnenden und wenigstens bis zu Verschwelungstemperatur des ersten Bindemittels gesteigerten Temperatur geschwelt wird.

9. Verfahren nach Anspruch 8, dadurch gekennzeichnet, daß nach Erreichen einer Endtemperatur zwischen 500° und 1350°C die Formlinge in inerter Atmosphäre in einem Zeitraum zwischen 20 Minuten und 20 Stunden durch Verschwelen, Verkoken, Calcinieren behandelt werden.

10. Verfahren nach Anspruch 1 bis 9, dadurch gekennzeichnet, daß zur Herstellung von Granulaten vorgegebener Körnung die "grünen" und die geschwelten Preßlinge gebrochen und klassiert werden.

11. Verfahren nach Ansprüche 1 oder 8, dadurch gekennzeichnet, daß den Ausgangsstoffen als weitere Komponente pulverige oder granulierte Zuschlagstoffe, insbesondere Oxide, hinzugefügt werden, die gegenüber den Ausgangsstoffen und im Rahmen des Vorschwelens, Verkokens oder Calcinierens inert sind.

12. Verfahren nach Anspruch 11, dadurch gekennzeichnet, daß als Zuschlagstoffe Quarzsande bis zu einem Anteil von 60 Gew.-%, bezogen auf das Ausgangsgemisch, beigemischt werden.

**Claims**

1. A method of producing reactive high-carbon compacts for use as reactants in chemistry or metallurgy, in which

i) a first proportion of high-carbon, relatively inert products selected from the group comprising lean coal, anthracite, meta-anthracite, coke, petroleum coke and graphite and containing less than 12 wt.% of volatile constituents relative to water-free and ash-free substance (waf) and a second proportion of highly reactive products obtained by coking of low-carbonised fossil raw materials or organic materials (e.g. peat coke, brown-coal or lignite coke or coked biomass, e.g. charcoal or lignin coke) are ground, the aforementioned proportions being used in a ratio of 40 - 99 wt.% of the first to 1 - 60 wt.% of the second,

ii) a first binder, i.e. bitumen or coal tar pitch, is then added at room temperature and is adapted to evaporate when heated, apart from a coking residue which bonds the initial products, and

iii) the mixture is then converted by pressure into a stable form, characterised in that

a) a second binder, likewise dry at room temperature, is added to the mixture, the volatile constituents of the first binder being expellable at a higher temperature than the constituents of the second binder, water-soluble, adhesive high-molecular polymers being used as second binders,

b) a liquid causing the second binder to stick is added at room temperature to the constituents of the starting mixture after mixing and grinding,

c) the mixture is then homogenised and, after a reaction and standing time, is converted into green compacts.

2. A method according to claim 1, characterised in that the second binder is hydroxyethyl cellulose, which is caused to swell and stick by using water or aqueous solutions, more particularly basic solutions.

3. A method according to claim 1, characterised in that the second binder is chosen from vegetable polysaccharides (dextrans, amyls) having a molecular weight between 4000 and 100000 and made adhesive by means of water or aqueous solutions.

4. A method according to claim 1, characterised in that the second binder is lignin obtained by hydrolysis or by alcohol or furfurol manufacture and caused to swell and stick by means of water or aqueous solutions, more particularly basic solutions.

5. A method according to claim 1, characterised in that the second binder is lignin sulphite, which is caused to swell and stick by means of water or aqueous solutions.

6. A method according to claims 1 to 5, characterised in that the second binder is caused to swell and stick by means of the suitable liquid within a conditioning time of 1 to 120 minutes.

7. A method according to claims 1 to 6, characterised in that the liquid which makes the second binder adhesive is dried out of the briquettes by gentle low-temperature drying, down to a residue of less than 5 wt.%.

8. A method according to claims 1 and 7, characterised in that the compacts for producing calcined briquettes are carbonised at a temperature beginning at about 100 ̊C and rising at least to the carbonisation temperature of the first binder.

9. A method according to claim 8, characterised in that after reaching a final temperature between 500 ̊C and 1350 ̊C, the briquettes are treated by carbonisation, coking or calcining in an inert atmosphere for between 20 minutes and 20 hours.

10. A method according to claims 1 to 9, characterised in that the "green" and the carbonised compacts are broken and graded in order to form granulates having a preset particle size.

11. A method according to claim 1 or 8, characterised in that pulverulent or granulated additives, more particularly oxides, which are inert with regard to the starting substances during carbonisation, coking or calcining, are added as an additional component to the starting substances.

12. A method according to claim 11, characterised in that the additional additives are quartz sand up to a proportion of 60 wt.% relative to the starting mixture.

**Revendications**

1. Procédé de fabrication de pièces moulées réactives, riches en carbone destinées à être utilisées comme partenaire réactionnel dans la chimie ou la métallurgie, dans lequel

i) une première portion de produits riches en carbone et peu réactifs, sélectionnés dans le groupe des charbons maigres, des anthracites, des métaanthracites, des cokes, des cokes de pétrole et du graphite, avec une teneur en composants volatils inférieure à 12% en poids rapportée à la substance anhydre et exempte de cendres et une deuxième portion de produits fortement réactifs qui ont été obtenus par carbonisation de produits bruts fossiles faiblement carbonisés ou de masses organiques, tels que du charbon de tourbe, des cokes bruns et de lignite, ainsi que des biomasses carbonisées (par exemple des charbons de bois et des cokes de lignine), sont broyées, les portions mentionnées étant mises en oeuvre dans une proportion de 40 à 99% en poids pour la première portion et de 1 à 60% en poids pour la deuxième,

ii) elles sont ensuite mélangées à température ambiante avec des bitumes ou des brais de goudron de houille constituant un premier liant qui a la propriété de se volatiliser en chauffant à l'exception d'un résidu de cokéfaction liant les produits mis en oeuvre, et

iii) dans lequel le mélange est ensuite pressé dans un moule stable, caractérisé en ce que,

a) un deuxième liant est ajouté à sec également à température ambiante, les composants volatils du premier liant pouvant être expulsés à des températures plus élevées que ceux du deuxième liant et le deuxième liant étant constitué par des polymères à haute densité moléculaire, solubles dans l'eau et collants,

b) il est ajouté à température ambiante aux composants du mélange de départ après mélange et broyage un liquide qui fait coller le deuxième liant,

c) le mélange est ensuite homogénéisé puis est formé en pièces moulées "vertes" après avoir laissé écouler un temps de réaction et de repos.

2. Procédé selon la revendication 1, caractérisé en ce que le deuxième liant est constitué par de la cellulose d'hydroxyéthyle que l'on fait gonfler et coller à l'aide d'eau ou de solutions aqueuses, en particulier des solutions basiques.

3. Procédé selon la revendication 1, caractérisé en ce que le deuxième liant est constitué par des polysaccharides obtenus à partir de plantes (dextranes, amylènes) dont le poids moléculaire est compris entre 4000 et 100000 et que l'on fait coller à l'aide d'eau ou de solutions aqueuses.

4. Procédé selon la revendication 1, caractérisé en ce que le deuxième liant est constitué par de la lignine résultant d'hydrolyses ou de procédés de fabrication d'alcool et de furfurol que l'on fait gonfler et coller à l'aide d'eau ou de solutions aqueuses , en particulier de solutions basiques.

5. Procédé selon la revendication 1, caractérisé en ce que le deuxième liant est constitué par du sulfite de lignine que l'on fait gonfler et coller à l'aide d'eau ou de solutions aqueuses.

6. Procédé selon les revendications 1 à 5, caractérisé en ce que l'on fait gonfler et coller le deuxième liant avec le liquide approprié pendant un temps de conditionnement compris entre 1 et 120 minutes.

7. Procédé selon la revendication 1 à 6, caractérisé en ce que le liquide qui fait coller le deuxième liant est extrait des pièces moulées par un séchage délicat à basse température à l'exception d'un résidu représentant moins de 5% en poids.

8. Procédé selon les revendications 1 à 7, caractérisé en ce que la pièce moulée servant à la fabrication de pièces moulées calcinées est carbonisée à une température d'environ 100° C au départ, portée ensuite au moins jusqu'à la température de carbonisation du premier liant.

9. Procédé selon la revendication 8, caractérisé en ce qu'après avoir atteint une température finale comprise entre 500 et 1350° C, les pièces moulées sont traitées en atmosphère inerte pendant une période comprise entre 20 minutes et 20 heures par carbonisation, cokéfaction, calcination.

10. Procédé selon les revendications 1 à 9, caractérisé en ce que pour fabriquer des granulats d'une grosseur de grains prédéterminée, les pièces moulées "vertes" et les pièces moulées carbonisées sont cassées et classées.

11. Procédé selon la revendication 1 ou 8, caractérisé en ce que l'on ajoute aux produits de départ d'autres composants constitués par des agrégats pulvérulents ou granulés, en particulier des oxydes, qui sont inertes par rapport aux produits de départ et au cours de la carbonisation, de la cokéfaction ou de la calcination.

12. Procédé selon la revendication 11, caractérisé en ce que les agrégats sont constitués par des sables silicieux ajoutés dans une proportion représentant jusqu'à 60% en poids du mélange de départ.

Fig. 1